(19) **Europäisches Patentamt**

**European Patent Office**

**Office européen des brevets**

(11) **EP 1 037 412 B1**

(12) **EUROPEAN PATENT SPECIFICATION**

(45) Date of publication and mention
of the grant of the patent:
**19.05.2004 Bulletin 2004/21**

(51) Int Cl.[7]: **H04B 10/142**, H04B 10/17

(21) Application number: **00200773.0**

(22) Date of filing: **06.03.2000**

(54) **Optical device converting a coherent optical signal to incoherent signal**

Optische Vorrichtung zur Umsetzung eines kohärenten optischen Signals in ein inkohärentes Signal

Dispositif optique pour convertir un signal cohérent optique à un signal incohérent

(84) Designated Contracting States:
**AT BE CH CY DE DK ES FI FR GB GR IE IT LI LU MC NL PT SE**

(30) Priority: **15.03.1999 EP 99830137**

(43) Date of publication of application:
**20.09.2000 Bulletin 2000/38**

(73) Proprietor: **Corning Photonic Technologies Inc.
Corning, NY 14831 (US)**

(72) Inventors:
• **Boffi, Pierpaolo
27058 Voghera (Pavia) (IT)**
• **Marazzi, Lucia
27100 Pavia (IT)**
• **Martinelli, Mario
20097 San Donato Milanese (Milano) (IT)**

• **Parolari, Paola
20121 Milano (IT)**

(74) Representative: **Poole, Michael John et al
Corning Limited
Patents & Licensing Department
Quantum House,
Maylands Avenue
Hemel Hempstead, Herts. HP2 7DE (GB)**

(56) References cited:
**EP-A- 0 523 484        US-A- 4 938 556**

• **COPPINGER F ET AL: "ALL-OPTICAL RF FILTER USING AMPLITUDE INVERSION IN A SEMICONDUCTOR OPTICAL AMPLIFIER" IEEE TRANSACTIONS ON MICROWAVE THEORY AND TECHNIQUES, vol. 45, no. 8, PART 02, 1 August 1997 (1997-08-01), pages 1473-1477, XP000696780 ISSN: 0018-9480**

**Description**

The present invention relates to an optical-optical device capable of transferring the digital information carried by a coherent optical signal to a highly incoherent light beam in such a way as to provide a highly incoherent signal carrying the said digital information.

At the present time, optical technology is predominantly used in telecommunications networks for transmitting optical signals, in which use is made of the known wideband properties offered by optical fibres, while the operations of processing optical signals, for example multiplexing and switching, are carried out by means of opto-electronic devices.

However, opto-electronic devices have the known disadvantages of electronic systems which are now becoming bottlenecks in optical communication systems and in optical networks. This is because an electronic apparatus has a narrow bandwidth with respect to the optical band available in optical communication systems, and is generally based on a relatively slow serial processing of signals.

Research is therefore being increasingly directed towards the possibility of using optics for processing signals as well as for transmitting them. This is because, potentially, wholly optical devices have a wide bandwidth and are transparent to the transmission bit rate, format and code.

Coppinger et al. ("All-Optical RF filter using amplitude inversion in a semiconductor optical amplifier", IEEE Transactions on Microwave Theory and Techniques, vol. 45, No. 8, pp. 1473-1477, August 1997) discloses a device comprising a first laser source which emits an optical signal at a wavelength $\lambda_1$ and is intensity modulated at radio frequency. This coherent signal $\lambda_1$ is divided into two parts, of which one part is sent to an optical delay line and the other is combined with a second continuous optical signal supplied by a second laser source and having a wavelength $\lambda_2$ different from $\lambda_1$. These last two signals are amplified by an erbium-doped optical amplifier (EDFA) and are then sent to a semiconductor amplifier (SOA). Owing to the known phenomenon of "cross-grain modulation", the optical signal $\lambda_2$ leaving the SOA is also intensity modulated but with a logic which is the inverse of that of the optical signal $\lambda_1$. At the output of the SOA, the coherent optical signal $\lambda_1$ is filtered and the coherent optical signal $\lambda_2$, with inverted logic with respect to the coherent optical signal $\lambda_1$, is recombined with the part of the coherent optical signal $\lambda_1$ which is propagated in the optical delay line. The two coherent optical signals $\lambda_1$ and $\lambda_2$ recombined in this way are then sent to a photodetector.

Since the two signals have two different wavelengths $\lambda_1$ and $\lambda_2$, the phase noise of the laser sources at the output of this photodetector is at the beat frequency ($\lambda_2 - \lambda_1$) of the two signals, instead of being in the base band as it is when signals having the same wavelength are used. In the experiments carried out by the authors, the phase noise at the beat frequency is thus filtered by means of a photodetector having a band which does not detect this beat frequency (p. 1475, right-hand column, lines 11-21).

The optical signal $\lambda_1$ and the optical signal $\lambda_2$ operating in said device are both coherent.

The inventors of the present invention perceived the necessity for an optical-optical device which, having received at its input a coherent optical signal carrying a set of digital data, is capable of supplying at its output a highly incoherent optical signal carrying the said set of digital data.

A first aspect of the present invention therefore consists of an optical-optical device comprising:

- an input for a coherent optical signal carrying a set of digital data;
- an active waveguide optically connected to the said input for the propagation of the said coherent optical signal, the said active waveguide having a first and a second end and being capable of generating highly incoherent light;
- a pump source for pumping the said active waveguide and obtaining a predetermined gain; and
- an output, optically connected to the said second end of the said active waveguide, for the exclusive output of at least part of the said highly incoherent light;

in which the said coherent optical signal has a power and a wavelength selected in such a way that the said set of digital data which it carries is transferred to the said highly incoherent light during its propagation in the said active waveguide.

In the present description and in the attached claims, the expression

$\Rightarrow$ "highly incoherent optical signal" is used to denote an optical signal having a coherence time $\tau_c$ of less than 20 ps and, therefore, a coherence length $L_c$ of less than approximately 4 mm, in which

- $\tau_c$ is assumed to be equal to $1/\Delta\nu$, where $\Delta\nu$ is assumed to be equal to the ratio $[(\Delta\lambda * c)/\lambda^2]$ and "c" is the velocity of light in a vacuum, $\Delta\lambda$ is what is conventionally known as the "full width at half maximum", in other words the difference between the two extreme wavelength values at which the optical spectrum of the optical signal is equal to half of its maximum value and $\lambda$ is assumed to be equal to the central wavelength of $\Delta\lambda$; and

- $L_c$ is assumed to be equal to the product $\tau_c * v$, where "v" is the velocity of light in the means of propagation in question (for example, in an optical fibre v is approximately equal to $2 \times 10^8$ m/s).

Preferably, the said expression "highly incoherent optical signal" is used to denote an optical signal having a coherence time $\tau_c$ of less than approximately 10 ps and, therefore, a coherence length $L_c$ of less than approximately 2 mm; more preferably, it is used to denote an optical signal having a coherence time $\tau_c$ of less than approximately 5 ps and, therefore, a coherence length $L_c$ of less than approximately 1 mm; even more preferably, it is used to denote an optical signal having a coherence time $\tau_c$ of less than approximately 1 ps and, therefore, a coherence length $L_c$ of less than approximately 0.2 mm.

⇒ "highly incoherent optical source" is used to denote a source which supplies a highly incoherent optical signal as defined above;

⇒ "coherent optical signal" is used to denote an optical signal having a coherence time $\tau_c$ of more than approximately 50 ps (in other words, a coherence length of more than approximately 10 mm); preferably, it is used to denote an optical signal having a coherence time $\tau_c$ of more than approximately 90 ps (in other words, a coherence length of more than approximately 18 mm); preferably, it is used to denote an optical signal having a coherence time τc of more than approximately 900 ps (in other words, a coherence length of more than approximately 180 mm);

⇒ "coherent optical source" is used to denote a source which supplies a coherent optical signal as defined above;

Advantageously, the said power and the said wavelength of the said coherent optical signal are selected in such a way as to saturate the said predetermined gain of the said active waveguide.

Typically, the said coherent optical signal is supplied by a conventional coherent laser source for optical telecommunications.

Preferably, the said coherent optical signal is intensity-modulated as a function of the said set of digital data at a predetermined bit rate. More preferably, the said intensity modulation is of the on/off type.

Typically, the said predetermined bit rate is at least 622 Mbit/s. More typically, it is at least 2.5 Gbit/s. Even more typically, it is at least 10 Gbit/s.

Preferably, the said active waveguide is of the type consisting of an optical fibre doped with at least one rare earth. Typically, the said at least one rare earth is erbium. When short processing times are required, the said active waveguide is preferably of the semiconductor type.

In the case of an active semiconductor waveguide, the said pump source supplies a pumping current having a suitable intensity. In turn, in the case of an active waveguide of the type consisting of an optical fibre doped with at least one rare earth, the said pump source consists, for example, of a conventional laser. For example, when the optical fibre is doped with erbium, the said laser supplies a pumping optical radiation having, preferably, a wavelength of approximately 980 nm or 1480 nm.

Advantageously, the quantity of highly incoherent light can be increased by connecting another source of highly incoherent light to the said first end of the said active waveguide.

In a first embodiment,

- the said first end of the said active waveguide forms the said input of the said optical-optical device;
- the said coherent optical signal and at least part of the said highly incoherent light are co-propagated in the said active waveguide from the said first end towards the said second end; and
- the said optical-optical device also comprises a suitable optical filter associated with the said output and capable of eliminating the said coherent optical signal after it has been propagated along the said active waveguide.

Typically, the said optical filter is capable of blocking the propagation of the said coherent optical signal while simultaneously allowing most of the said ASE to pass. For example, the said filter is selected from the group of conventional devices comprising a high-pass filter, a low-pass filter, a "notch" filter and a filter having a substantially bell-shaped transfer function.

In a preferred embodiment,

- the said input of the said optical-optical device is also optically connected to the said second end of the said waveguide;
- the said highly incoherent light is propagated at least partially in the said waveguide from the said first end towards the said second end; and
- the said coherent optical signal is counter-propagated in the said first waveguide from the said second end towards the said first end.

Typically, this preferred embodiment of the optical-optical device also comprises an optical beam splitter having a first, a second and a third port, of which the first forms the said input of the said optical-optical device, the second is connected to the said second end of the said active waveguide and the third forms the said output of the said optical-optical device.

Preferably, the said optical beam splitter is an optical circulator. Alternatively, it may be a conventional $1\times2$ waveguide or fused fibre splitter.

In a second aspect, the present invention relates to a method for transferring a set of digital data from a coherent optical signal to a highly incoherent light beam in such a way as to produce a highly incoherent optical signal carrying the said set of digital data, the said method comprising the phases of

a) pumping an active waveguide with a pump source, to obtain a predetermined gain and to generate a highly incoherent light beam;
b) propagating the said coherent optical signal through the said active waveguide in such a way that the said highly incoherent light is intensity-modulated as a function of the said set of digital data;
c) sending at least one part of the said highly incoherent light, modulated in this way, to subsequent processing stages; and
d) preventing the said coherent optical signal from being sent, after it has been propagated along the said active waveguide, to the said subsequent processing stages together with the said at least one part of the said highly incoherent light.

Advantageously, the said coherent optical signal is supplied at a power and wavelength such that the said gain of the said active waveguide is saturated.

Typically, the said coherent optical signal is intensity-modulated at a predetermined bit rate as a function of the said set of digital data.

Advantageously, in phase b) the quantity of highly incoherent light to be intensity-modulated can be increased by propagating a second highly incoherent light beam in the said active waveguide.

In one embodiment, phase d) is carried out by means of suitable optical filtering of the said coherent optical signal after it has been propagated along the said active waveguide.

In another embodiment, phase d) is carried out by propagating the said coherent optical signal in the said active waveguide in the opposite direction to that of the said at least one part of the highly incoherent light beam.

For details of the characteristics of the said active waveguide, of the said pump source, of the said coherent optical signal and of the said optical filter used in the method according to the present invention, reference should be made to what has been stated above concerning the device according to the present invention.

Characteristics and advantages of the invention will now be illustrated with reference to embodiments represented by way of example and without restriction in the attached drawings, in which:

- Fig. 1 is a schematic representation of an optical apparatus which uses an optical-optical device according to the invention;
- Fig. 2 is a schematic representation of a first embodiment of an optical-optical device according to the invention;
- Fig. 3 is a schematic representation of a second embodiment of an optical-optical device according to the invention;
- Fig. 4 is a schematic representation of a third embodiment of an optical-optical device according to the invention;
- Fig. 5 is a schematic representation of a fourth embodiment of an optical-optical device according to the invention;
- Fig. 6 shows schematically an encoding process in a CDMA system;
- Fig. 7 is a schematic representation of an optical communication system comprising the optical apparatus shown in Fig. 1;
- Fig. 8 shows schematically the experimental set-up used in a first series of measurements made to verify the behaviour of an optical-optical device according to the invention (having the configuration shown in Fig. 4) in an optical correlator of bit sequences;
- Fig. 9 shows the results of an operation of autocorrelation (Fig. 9a) and cross-correlation (Fig. 9b) obtained with the experimental set-up shown in Fig. 8;
- Fig. 10 shows schematically the experimental set-up used in a first series of measurements made to verify the behaviour of an optical-optical device according to the invention (having the configuration shown in Fig. 2) in an optical correlator of bit sequences;
- Fig. 11 shows the results of an operation of autocorrelation (Fig. 11a) and cross-correlation (Fig. 11b) obtained with the experimental set-up shown in Fig. 10; and
- Fig. 12 shows schematically the experimental set-up used in a third series of measurements made in order to compare the behaviour of an optical correlator which uses an optical-optical device according to the invention with that of an optical correlator of the conventional type.

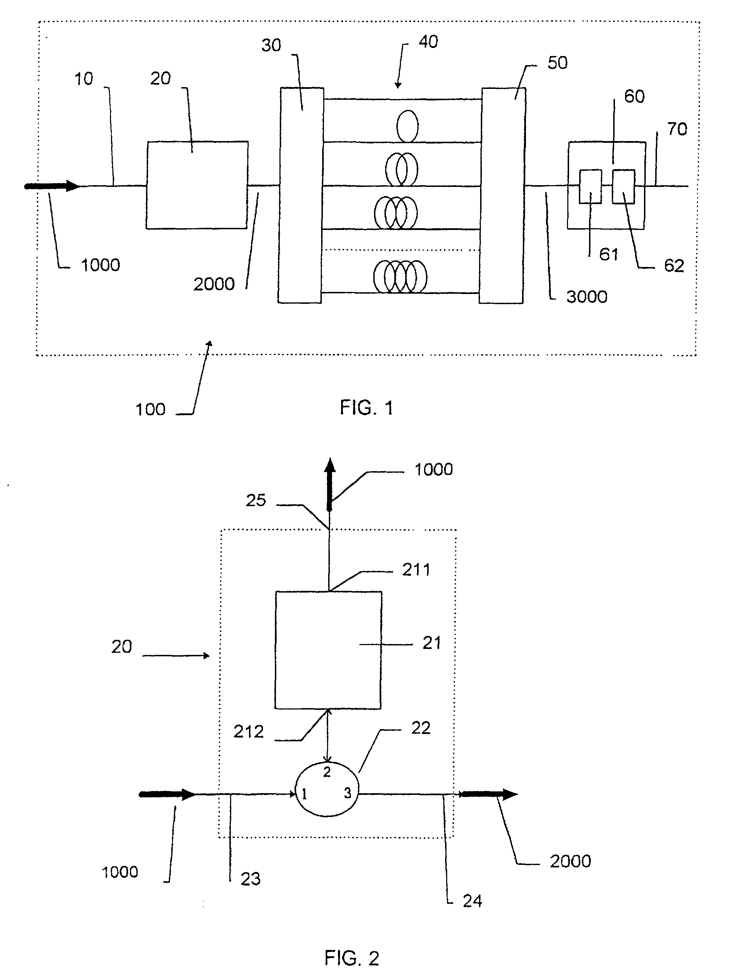

Fig. 1 shows an example of an optical apparatus 100 which uses an optical-optical device 20 according to the present invention.

This optical apparatus 100 comprises an input 10 for a coherent optical signal 1000 which is amplitude modulated at a predetermined bit rate according to a set of digital data, an optical-optical device 20 according to the invention which transfers the said set of digital data to a highly incoherent optical signal 2000 and an optical delay line filter for processing the said highly incoherent optical signal 2000. This optical delay line filter comprises an optical beam splitter 30, a plurality 40 of optical delay lines, a coupler 50, a comparator device 60 and an output 70.

The input 10 typically consists of an optical fibre. Preferably, the optical fibre is single-mode at the wavelength of the coherent optical signal 1000.

In a first embodiment shown in Fig. 2, the optical-optical device 20 according to the invention comprises an input 23, an active waveguide 21, an optical beam splitter 22, a first output 24 and a second output 25.

The input 23 is optically connected to the input 10 of the apparatus 100, while the first output 24 is connected to the input of the optical beam splitter 30.

The optical beam splitter 22 has three ports 1, 2, 3, of which the first port 1 forms the input 23 of the optical-optical device 20, the second port 2 is connected to the active waveguide 21, and the third 3 forms the first output 24 of the optical-optical device 20.

Preferably, the optical beam splitter 22 consists of a conventional optical circulator.

Alternatively, it may consist of a conventional "beam splitter" of the fused fibre type or made by other technologies such as that of integrated optics.

The active waveguide 21 has a first and a second end 211 and 212. The first end 211 forms the second output 25 of the optical-optical device 20, while the second end 212 is connected to the port 2 of the optical beam splitter 22.

This active waveguide 21 is preferably of the semiconductor or optical fibre type. Typical examples of these devices are, respectively, an active waveguide formed with compounds of InP/InGaAsP and an active fibre doped with rare earths such as erbium.

This active waveguide 21 is conventionally pumped by a pump source (not shown). For example, in the case of an active semiconductor waveguide it is pumped by a pumping current having a suitable intensity, and in the case of an active erbium-doped optical fibre waveguide it is pumped by a pump laser, typically emitting at 980 nm or 1480 nm.

Typically, the coherent optical signal 1000 is supplied by a conventional coherent laser source, is obtained from a conventional optical telecommunication line and has a wavelength selected from those typically used in optical transmission (1300-1600 nm).

For example, the coherent optical signal 1000 has a wavelength of approximately 1555 nm and has a coherence time and length of 100 ps and 2 cm respectively.

It is also intensity-modulated, typically by a binary modulation of the on/off type, so that the bit 1 corresponds to the presence of an optical signal having a predetermined intensity and the bit 0 corresponds to the substantial absence of an optical signal.

Additionally, the power and wavelength of this coherent optical signal 1000 are selected in such a way as to saturate the gain of the active wavelength 21 and also to cause the spontaneous emission (Amplified Spontaneous Emission, ASE) at the output of the active waveguide 21 to be intensity-modulated as a result of the known phenomenon of "cross-gain modulation" (K. Obermann et al., "Performance analysis of wavelength converters based on cross-gain modulation in semiconductor-optical amplifiers", Journal of Lightwave Technology, vol. 16, No. 1, pp. 78-85 1998). More particularly, the spontaneous emission at the output of the active waveguide 21 will have an intensity modulated by a logic of opposite sign to the coherent optical signal 1000. In other words, a bit equal to 1 of the coherent optical signal 1000 will correspond to a bit equal to 0 of the spontaneous emission, and vice versa.

If the power of the coherent optical signal 1000 at the input of the optical apparatus 100 is insufficient to saturate the gain of the active waveguide 21, it can be suitably amplified by a conventional optical amplifier.

For the purposes of the present invention, the gain of the active waveguide 21 is considered to be saturated when the power of the coherent optical signal 1000 is greater than the saturation power of the said active waveguide 21 at the wavelength of the said coherent optical signal 1000. In turn, the saturation power is the power at which the gain (expressed in dB) of the active waveguide 21 decreases by 3 dB with respect to the gain which the said active waveguide 21 has when it operates in linear conditions.

In this connection, it is worth noting that the saturation velocity of the gain of an active waveguide depends on the pump power $P_p$ of the active waveguide, the power $P_s$ of the saturating coherent optical signal 1000, and the typical decay time $\tau$ of the laser level excited by the active waveguide. The saturation takes place more rapidly as $P_p$ and $P_s$ increase and as $\tau$ decreases.

For example, in the case of a square-wave modulated saturating optical signal, the time constant $t_{sat}$ of the saturation phenomenon is given by:

$$t_{sat} = \frac{\tau}{\left(1 + \dfrac{P_p}{P_{sat}(\lambda_p)} + \dfrac{P_s}{P_{sat}(\lambda_s)}\right)} \qquad (1)$$

where $P_{sat}(\lambda_p)$ is the saturation power of the active waveguide at the pumping wavelength $\lambda_p$, $P_{sat}(\lambda_s)$ is the saturation power of the active waveguide at the wavelength of the saturating optical signal $\lambda_s$, and the saturation power $P_{sat}$ of an active waveguide at a wavelength $\lambda$ is defined as

$$P_{sat}(\lambda) = \frac{h\lambda A}{[\sigma_a(\lambda) + \sigma_e(\lambda)]^* \tau} \qquad (2)$$

where h is Planck's constant, A is the effective optical beam area, $\sigma_a(\lambda)$ is the absorption cross section and $\sigma_e(\lambda)$ is the emission cross section. In the case of an active waveguide of the optical fibre type, the effective optical beam area is given by $\pi\omega^2$, where $\omega$ is the mode radius (E. Desurvire, "Erbium-doped fiber amplifiers. Principle and Applications", John Wiley & Sons, 1994, p. 19).

Additionally, the recovery time $t_{rec}$ of the active waveguide, in other words the time required for the active waveguide to return to the initial condition after the cessation of the saturating optical signal, becomes shorter as $P_p$ increases and as $\tau$ decreases.

For example, in the case of a square-wave modulated saturating optical signal, the recovery time $t_{rec}$ of the saturation phenomenon is given by:

$$t_{rec} = \frac{\tau}{\left(1 + \dfrac{P_p}{P_{sat}(\lambda_p)}\right)}$$

Since $\tau$ is much smaller in an active waveguide of the semiconductor type than in one of the optical fibre type, the semiconductor type has much faster response times and is more suitable for use when the coherent optical signal 1000 is modulated at high bit rates and consequently fast processing times are required. For example, for typical active waveguides of the semiconductor type the decay time $\tau$ is of the order of a few hundred picoseconds or 1 ns, while for typical active waveguides of the erbium-doped optical fibre type it is of the order of 10 ms.

The coherent optical signal 1000 thus enters the optical-optical device 20, passes through the ports 1 and 2 of the optical circulator 22, is propagated along the active waveguide 21 from the end 212 to the end 211 and then leaves the optical-optical device 20 through the said second output 25.

In turn, part of the ASE generated in the active waveguide 21 is propagated towards the first end 211 and then leaves the optical-optical device 20 through the second output 25, and part is propagated towards the second end 212 and then leaves the optical-optical device 20 through the first output 24 and thus enters the optical beam splitter 30.

The coherent optical signal 1000 is then counter-propagated with respect to the part of the ASE which is propagated towards the first output 24 of the optical-optical device 20.

Passing through the active waveguide 21, the coherent optical signal 1000 intensity-modulates the gain of the said active waveguide 21 and thus transfers the digital information carried by it to the ASE. The said ASE is a highly incoherent light beam. It typically has a full width at half maximum, $\Delta\lambda$, of the order of tens of nm, a coherence time of the order of a picosecond and a coherence time of the order of a few $\mu$m. For example, in the case of an active waveguide consisting of erbium-doped optical fibre, the ASE has a full width at half maximum of approximately 30 nm, a coherence time of approximately 0.25 ps and a coherence length of approximately 51 $\mu$m. On the other hand, in the case of an active waveguide of the semiconductor type, the ASE typically has a full width at half maximum of approximately 100 nm, a coherence time of approximately 0.075 ps and a coherence length of approximately 15 $\mu$m.

The part of the modulated ASE entering the optical beam splitter 30 forms a highly incoherent optical signal 2000 carrying the same digital information (with inverted logic) as the coherent optical signal 1000.

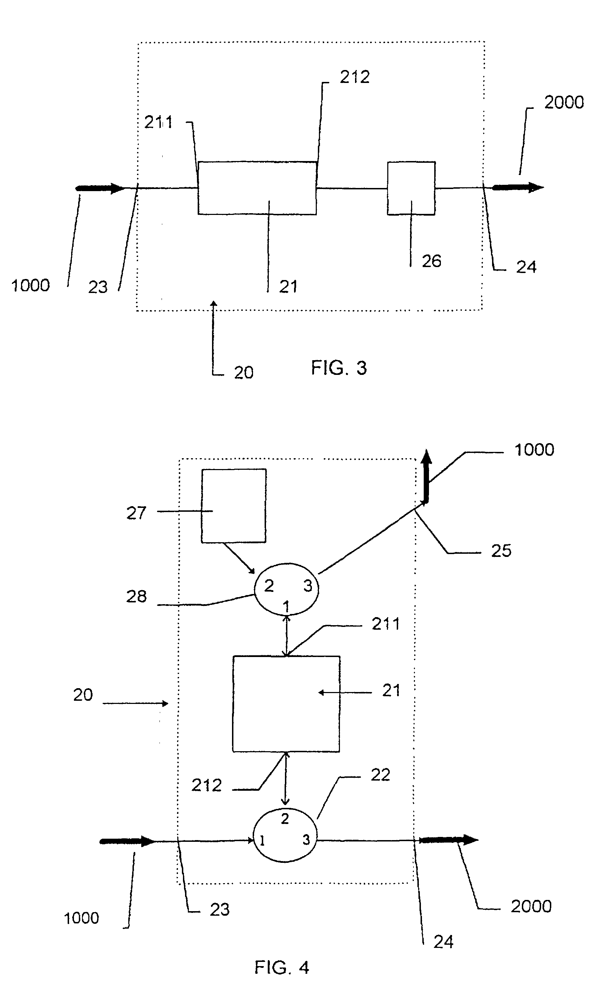

In a second embodiment (Fig. 3), the optical-optical device 20 according to the invention has the same structural and functional characteristics (for which reference should be made to the description above) as the first embodiment in Fig. 2, except for the fact that

- it does not have the optical beam splitter 22;
- it does not have the second output 25;
- it has an optical filter 26 between the second end 212 of the active waveguide 21 and the output 24;
- the first end 211 of the active waveguide 21 forms the input 23 of the optical-optical device 20;
- the second end 212 of the active waveguide 21 forms the output 24 of the optical-optical device 20.

Since in this embodiment the coherent optical signal 1000 is propagated in the active waveguide 21 from the end 211 towards the end 212 - in other words, in the direction of co-propagation with respect to the part of the modulated ASE leaving the optical-optical device 20 from the output 24 - it is filtered at the output from the optical-optical device 20 by the optical filter 26. In this way, only the modulated ASE which forms the highly incoherent optical signal 2000 is sent to the input of the optical beam splitter 30.

The optical filter 26 is an optical filter capable of blocking the propagation of the coherent optical signal 1000 while simultaneously allowing most of the said ASE to pass. Advantageously, it consists of a conventional "notch" filter. Alternatively, it may also consist of a conventional high-pass or low-pass filter, or of a conventional filter having a substantially bell-shaped transfer function.

In a third embodiment (Fig. 4), the optical-optical device 20 according to the invention has the same structural and functional characteristics (for which reference should therefore be made to the description above) as the first embodiment in Fig. 2, except for the fact that it also comprises a second active waveguide 27 and a second optical beam splitter 28.

The said second active waveguide 27 is optically connected to the first end 211 of the first active waveguide 21.

Like the first waveguide 21, the second waveguide 27 is preferably of the semiconductor or optical fibre type, and is conveniently pumped by a pumping source (not shown). For example, in the case of an active waveguide of the semiconductor type it is pumped by a pumping current having a suitable intensity, and in the case of an active waveguide of the erbium-doped optical fibre type it is pumped by a pump laser, typically emitting at 980 nm or 1480 nm.

The optical beam splitter 28 has three ports 1, 2, 3 of which the first 1 is connected to the first end 211 of the first active waveguide 21, the second 2 is connected to the output of the second active waveguide 27 and the third 3 forms the second output 25 of the optical-optical device 20.

Preferably, the optical beam splitter 28 consists of a conventional optical circulator.

Alternatively, it may consist of a conventional "beam splitter" of the fused fibre type. In this case, an optical isolator (not shown) is preferably located between the port 2 of the optical beam splitter and the output of the second active waveguide 27, to prevent the coherent optical signal 1000 from entering the said second active waveguide 27 and, simultaneously, to allow the ASE generated by the said second active waveguide 27 to be propagated towards the said first active waveguide 21.

Alternatively, in place of the optical beam splitter 28, it is possible to use a conventional optical isolator (not shown), located between the first end 211 of the first active waveguide 21 and the output of the second active waveguide 27, and capable of blocking the input of the said coherent optical signal 1000 into the said second active waveguide 27 while allowing the ASE generated by the said second active waveguide 27 to be propagated towards the said first active waveguide 21.

The second active waveguide 27, not having an optical signal at its input, emits from its output only spontaneous emission which then passes through the ports 2 and 1 of the optical beam splitter 28 and is propagated along the first active waveguide 21 from the end 211 to the end 212, increasing the power of the spontaneous emission in the optical-optical device 20 in the direction of counter-propagation with respect to the coherent optical signal 1000.

In turn, the coherent optical signal 1000 enters the optical-optical device 20, passes through the ports 1 and 2 of the optical beam splitter 22, is propagated along the first active waveguide 21 from the end 212 to the end 211, passes through the ports 1 and 3 of the optical beam splitter 28 and thus leaves the optical-optical device 20 through the second output 25.

As it passes through the active waveguide 21, the coherent optical signal 1000 modulates the gain of the said active waveguide 21, as a result of the phenomenon of cross-gain modulation, and thus transfers the digital information which it carries (with inverted logic) to the ASE generated in the first active waveguide 21 which has a high intensity, owing to the spontaneous emission from the second active waveguide 27.

The modulated ASE leaving the optical-optical device 20 through the first output 24 thus forms the highly incoherent optical signal 2000 which is sent to the optical beam splitter 30.

This last embodiment is particularly advantageous when, for example, the highly incoherent optical signal 2000 is required to have a power value greater than that of the ASE generated by the first active waveguide 21 only.

Larger quantities of ASE may also be obtained by increasing the length of the first active waveguide 21 and/ or by increasing the power of its pumping source.

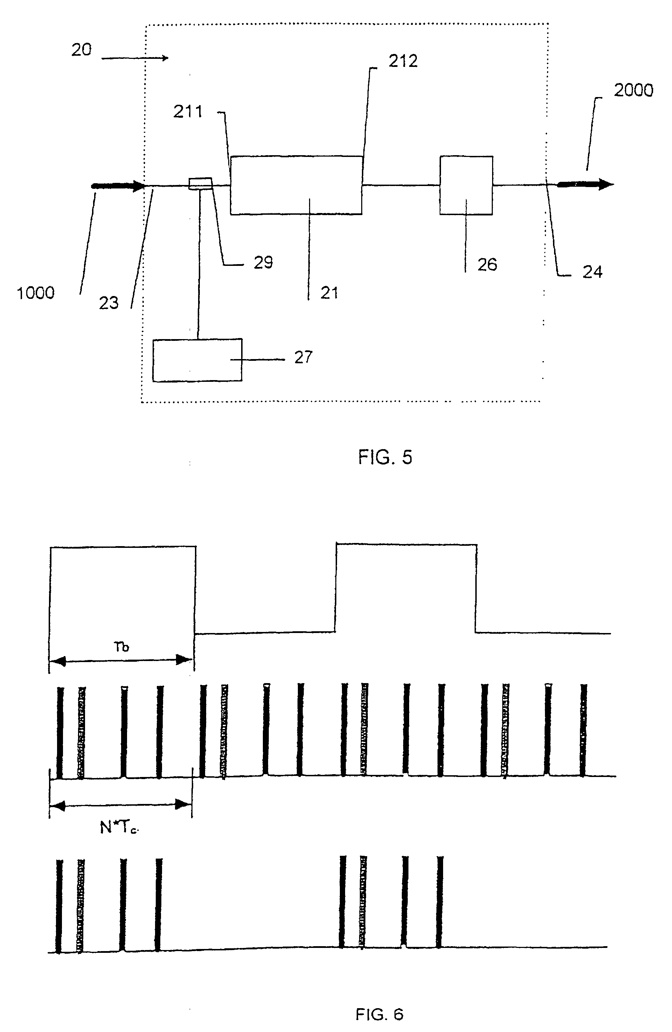

In a fourth embodiment (Fig. 5), the optical-optical device 20 according to the invention has the same structural and functional characteristics (for which reference should therefore be made to the description above) as the second embodiment in Fig. 3, except for the fact that it also comprises a second active waveguide 27, optically connected to the first end 211 of the first active waveguide 21, and a conventional optical beam coupler 29 for simultaneously sending the ASE from the second active waveguide 27 and the coherent optical signal 1000 to the active waveguide 21.

In this embodiment, the coherent optical signal 1000 is co-propagating, as in the second embodiment in Fig. 3, with the part of the ASE which leaves the optical-optical device 20 through the first output 24 and is then eliminated at the output by the optical filter 26. Additionally, as in the third embodiment in Fig. 4, it transfers its digital information to the ASE generated in the first active waveguide 21 which has a high intensity owing to the spontaneous emission from the second active waveguide 27.

Returning now to the description of the optical apparatus 100, the optical beam splitter 30 clones the highly incoherent optical signal 2000 from the optical-optical device 20 into N highly incoherent optical signals, each having an intensity of 1/N times the intensity of the highly incoherent optical signal 2000 at its input. Each of the said N highly incoherent optical signals is then sent to the corresponding one of the said optical delay lines 40.

The optical beam splitter 30 is, for example, a $1 \times N$ fused fibre single beam splitter, or is formed by an equivalent number of $1 \times 2$ fused fibre beam splitters, arranged in a tree configuration is such a way as to produce a $1 \times N$ splitter.

Alternatively, the optical beam splitter 30 may be produced by other technologies such as that of integrated optics.

The optical delay lines 40 preferably consist of sections of optical fibre. Alternatively, when high bit rates are used, they may also be made by integrated optics technology.

Their lengths differ from each other. More particularly, the difference in length between one line and another is equal to a predetermined length $\Delta L$ or a multiple thereof. This length $\Delta L$ is selected, as described below, in accordance with a predetermined item of information which is to be recognized. Additionally, for operating in conditions of incoherence, the said predetermined length $\Delta L$ is much greater than the coherence length of the highly incoherent optical signal 2000.

The N highly incoherent optical signals, which are propagated in the N optical delay lines, are thus delayed with respect to each other by a fundamental time $\Delta T$ or a multiple thereof, where $\Delta T$ is equal to $\Delta L/v$ and v is the velocity of the optical signals in the optical delay lines.

When the said optical delay lines 40 are made in integrated optics technology, conventional thermo-optical length controllers ("heaters") - not shown - are preferably located at their outputs or alternatively along them, enabling the length of each line to be regulated accurately.

On the other hand, when the optical delay lines 40 consist of sections of optical fibre, a similar effect is obtained with conventional mechanical devices (stretchers), such as a suitable set of pulleys controlled by a stepping motor.

Typically, the said devices (heaters and stretchers) are controlled by a suitable electronic control circuit.

The optical coupler 50 recombines (adds in incoherent mode) the N highly incoherent optical signals delayed by the optical delay lines 40 into a single highly incoherent optical output signal 3000 having an intensity which, as described below, is at a maximum in the presence of a predetermined item of information which is to be selected.

The said optical coupler 50 consists, for example, of a single $N \times 1$ fused fibre beam splitter or is formed from an equivalent number of $2 \times 1$ fused fibre beam splitters arranged in cascade in such a way as to produce an $N \times 1$ splitter.

Alternatively, the optical coupler 50 may be produced by other technologies such as that of integrated optics.

The coherent optical signal 3000 is then processed by the comparator device 60 and sent by it to the output 70 of the apparatus 100.

In one embodiment, the comparator device 60 comprises a photodetector 61 and a threshold circuit 62. The photodetector 61 measures the intensity of the highly incoherent optical signal 3000 and converts it to a corresponding voltage value V. The threshold circuit 62 compares this voltage value V with a predetermined voltage threshold $V_{th}$.

The value of $V_{th}$ is selected from time to time, in a conventional way, according to the predetermined item of information which is to be selected.

Owing to the presence of the optical-optical device 20 according to the invention, which transfers the digital information carried by a coherent optical signal to a highly incoherent optical signal, the optical apparatus 100 operates with coherent optical signals at its input. It can therefore be used in any of the currently known optical communication systems used for transmitting optical signals from coherent laser sources having, typically, coherence times of the order of a hundred of picoseconds and coherence lengths of the order of tens of millimetres.

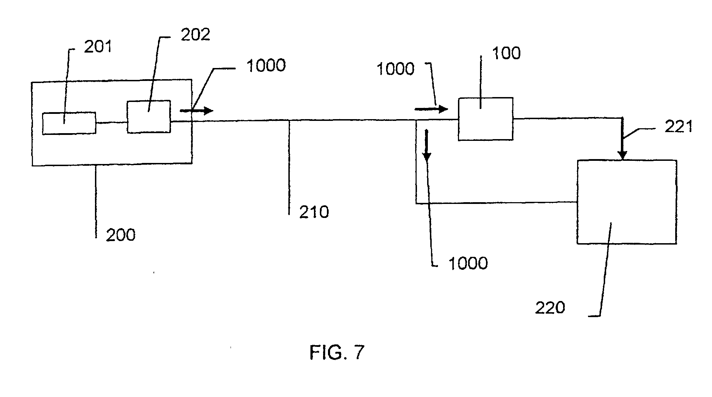

Fig. 7 shows an example of an optical communication system comprising at least one optical apparatus 100 which, in turn, comprises an optical-optical device according to the invention.

This system also comprises a transmitting apparatus 200, an optical transmission line 210 and a receiving apparatus 220.

The transmitting apparatus 200 is a conventional apparatus capable of transmitting the coherent optical signal 1000. Typically, it comprises a conventional laser source 201 for supplying a continuous optical signal 1000 at a wavelength typical of optical transmissions (1300-1600 nm) and a conventional modulator 202 capable of modulating the intensity of the said optical signal 1000 at a predetermined bit rate and as a function of a set of digital data to be transmitted along the transmission line 210. Alternatively, the transmitting apparatus 200 may comprise a direct-modulation laser source.

The transmission line 210 typically comprises a conventional optical fibre inserted in an optical cable. Typical lengths of the said transmission line 210 are of the order of one km or of tens of km. When the said line comprises optical amplifiers, it typically has a length of the order of hundreds or thousands of km.

The receiving apparatus 220 is an apparatus capable of processing the coherent optical signal 1000 according to the required applications.

In the example shown in Fig. 7, the optical apparatus 100 is located in the transmission line 210 and is connected to the receiving apparatus 220. Part of the coherent optical signal 1000 from the transmission line 210 is sent to the optical apparatus 100 and part is sent to the receiving apparatus 220. The optical apparatus 100, after processing the part of the coherent optical signal 1000 at its input, sends the result 221 of the operation which it has carried out to the receiving apparatus 220 so that the latter can process it.

For example, in code division multiple access (CDMA) systems, the optical apparatus 100 is capable of recognizing, as will be explained subsequently, whether or not a "1" bit which arrives at its input is intended for the receiving apparatus 220, and sends the result 221 of this recognition to the said receiving apparatus 220. If recognition takes place, the receiving apparatus 220 thus receives the part of the said coherent optical signal 1000 which arrives at its input.

The aforesaid optical communication system may also comprise other devices such as optical amplifiers, adapters, opto-electronic regenerators, optical-optical regenerators, and switching nodes of an optical network, where a multiplicity of transmission lines converge and originate, according to criteria which will be evident to a person skilled in the art on the basis of the present description and without departure from the principle of the invention.

With reference now to an example of application of the optical apparatus 100 comprising an optical-optical device 20 according to the invention, this apparatus may be used in an optical communication system in which coherent optical signals are transmitted, as a wholly optical correlator for selecting a predetermined sequence of N bits from a flow of sequences of N bits.

This type of operation is required, for example, in the known code division multiple access (CDMA) transmission systems.

In CDMA systems, information is encoded by means of a special code which enables users who use the same transmission channel to be distinguished from each other. From time to time, the maximum number of users who can use the same transmission channel is selected, as a function of various parameters such as the length of the bit sequences, the type of sequences used and the desired signal-noise ratio.

The information transmitted by each user is thus encoded by means of a suitable binary sequence, called the "chip sequence", which enables one user to be distinguished from another. More particularly, each bit having a duration $T_b$ corresponding to a logical "1" is encoded with the said chip sequence, while the bits corresponding to a logical "0" are not encoded. The chip sequence is therefore an encoding of the destination of a transmitted "1" bit.

Advantageously, the chip sequence is an orthogonal optical sequence [J. Salehi, "Code division multiple access techniques in optical fiber networks. Part 1: fundamental principles", IEEE Transactions on Communications, vol. 37, No. 8, August 1989, pp. 824-833; J. Salehi et al., "Code division multiple access techniques in optical fiber networks. Part 2: system performance analysis", IEEE Transactions on Communications, vol. 37, No. 8, August 1989, pp. 834-842].

The process of encoding a sequence of bits belonging to a predetermined user is shown in Fig. 6, where the top trace represents the sequence of bits, the middle trace represents the chip sequence having a repetition period of $T_b$, and the bottom trace represents the signal which is obtained as a result of encoding. As may be seen, the chip sequence consists of N bits, which are subsequently called "chips", having a chip time $T_c$ such that $T_b$ is equal to $N*T_c$.

Since the signal received by each user comprises data intended for other users as well, the user must recognize, among all the bits arriving at his input, those which are intended for him.

This recognition is generally carried out by an operation of correlation between the bits arriving at a receiver and the chip sequence identifying this receiver.

The optical apparatus 100, comprising an optical-optical device 20 according to the invention, can be used to carry out this operation.

In this application, the number of optical delay lines 40 of the apparatus 100 is equal to the number of unitary chips (corresponding to a logical 1) present in the chip sequence, and the difference in length between these lines is selected in accordance with the position of the unitary chips with respect to each other in the chip sequence.

For example, when the chip sequence is 1001000100001 and $\Delta L_c$ is the length of a section of line capable of imparting to the optical signal a delay $\Delta T$ equal to the chip time $T_c$ ($\Delta L_c = T_c{}^*v$, where v is the velocity of the highly incoherent optical signals in the optical delay lines), the optical apparatus 100 has 4 delay lines, of which

- the first has a length $L_1$ which is not critical for the purposes of the operation of the optical apparatus 100. For reasons of compactness, it preferably has a length $L_1$ capable of imparting a negligible delay to the optical signal which is propagated in it,
- the second has a length $L_2 = L_1 + 5{}^*\Delta L_c$,
- the third has a length $L_3 = L_2 + 4{}^*\Delta L_c$, and
- the fourth has a length $L_4 = L_3 + 3{}^*\Delta L_c$.

Thus when the chip sequence is present at the input of the optical apparatus 100, the highly incoherent optical signal 3000 is at a peak of intensity. Conversely, when a sequence of bits other than the chip sequence is present, the optical signal 3000 has a lower intensity.

By suitably selecting the threshold of the comparator device 60 and by comparing the intensity of the optical signal 3000 with this threshold, it is therefore possible to determine whether or not a sequence of bits at the input of the optical apparatus 100 was equal to the chip sequence.

At this point, it is also worth noting that, for operating in a condition of incoherence, $\Delta L_c$ must be much greater than the coherence length of the highly incoherent optical signal 2000 and that, for the aforesaid relation ($\Delta L_c = T_c{}^*v$), the chip time $T_c$ must be much greater than the coherence time of the highly incoherent optical signal 2000.

Therefore, owing to the presence of the optical-optical device 20 according to the invention, which transfers the digital information carried by the coherent optical signal 1000 to the highly incoherent optical signal 2000 having a coherence time of the order of a picosecond, the optical apparatus 100 can process, in incoherent conditions, even sequences of bits having bit times much smaller than those typical of optical communication systems in which bit rates of 2.5, 10 and 40 Gbit/s (corresponding to bit times of 400, 100 and 25 ps respectively) are used.

The inventors of the present invention have made experimental measurements in order to verify the behaviour of the optical apparatus 100, comprising an optical-optical device according to the invention, in this application as an optical correlator of sequences of N bits.

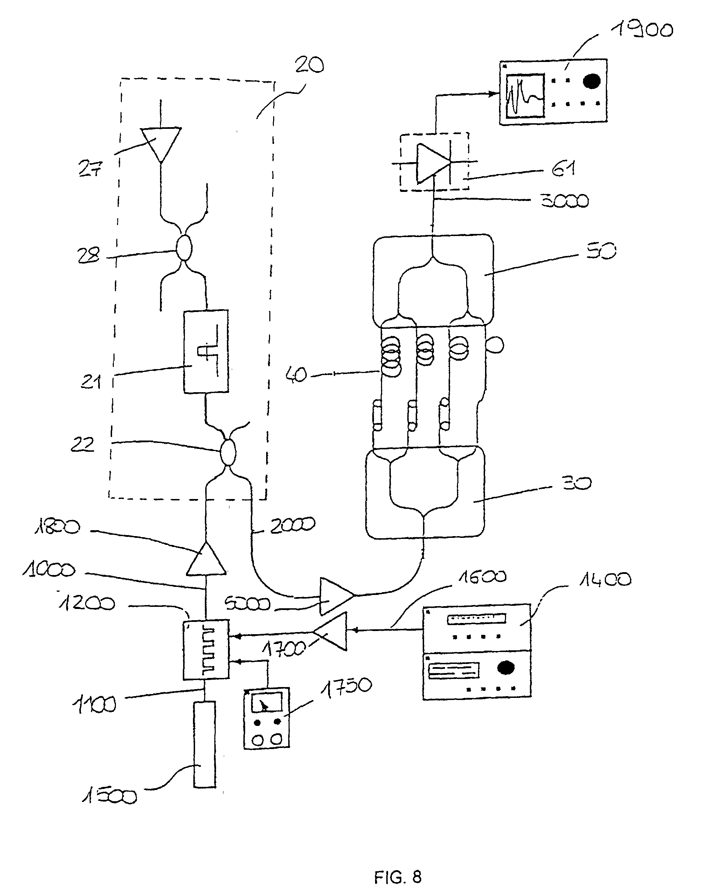

In a first series of measurements, the experimental set-up shown in Fig. 8 was used, in which the reference numbers previously used in Figures 1 to 5 have been used for the elements of the optical apparatus 100 and of the optical-optical device 20 according to the invention.

As may be seen in Fig. 8, the coherent optical signal 1000 carrying the digital information was obtained with a Nortel LC-155CA-20 laser source 1500, which emits a continuous optical signal 1100 having a power of approximately 500 $\mu$W, a wavelength of approximately 1550 nm, and a coherence time and length of approximately 100 ps and 2 cm respectively. The continuous optical signal 1100 leaving the laser 1500 was subsequently modulated by means of an electro-optical modulator of the Mach Zehnder type 1200, produced by the present applicant. This modulator 1200 was controlled by an electrical signal at radio frequency 1600 which was generated by a pattern generator made by HP (model 70841B) and a clock generator made by HP (model 8648C) (indicated jointly in the figure by the number 1400) and then amplified by a radio frequency amplifier 1700. Additionally, the said modulator 1200 was also controlled by a variable power supply unit 1750 to fix the operating point (bias).

The pattern used to modulate the continuous optical signal 1100 consisted of 30 bits, the first thirteen of which corresponded to the chip sequence 1001000100001, while the remainder were equal to zero. Additionally, a bit time (chip time $T_c$) and a bit rate (chip frequency $f_c$) of 400 ps and 2.5 Gbit/s respectively were used.

The coherent optical signal 1000 modulated in this way was subsequently amplified by an optical amplifier 1800 produced by the present applicant (Amplifos OP-980-F) to obtain a mean output power of approximately 1.32 mW. This optical amplifier 1800 had within it an optical isolator capable of preventing the ASE from the optical beam splitter 22 from entering the optical amplifier 1800.

The optical-optical device 20 according to the invention had the configuration shown in Fig. 4.

The device used as the second active guide 27 was an active fibre optical amplifier produced by the present applicant (Amplifos OP-980-F), which, when pumped with a suitable pump power and in the absence of an optical signal at its input, supplied at the input of the first active waveguide 21 an ASE having a power of approximately 71 $\mu$W and a coherence time and length of approximately 0.27 ps and 55 $\mu$m respectively. Additionally, the said optical amplifier had within it an optical isolator capable of preventing the coherent optical signal 1000 from entering the second active guide 27.

The optical beam splitter 28 was a 30/70 fused fibre splitter made by MP Fiber Optics.

The device used as the first active waveguide 21 was a semiconductor optical amplifier with a length of 500 $\mu$m, produced by Opto Speed and pumped with a current of 240 mA.

The optical beam splitter 22 was a 30/70 fused fibre splitter made by MP Fiber Optics.

Thus the highly incoherent optical signal 2000 at the output of the optical-optical device 20 had a coherence time and length of approximately 0.27 ps and 55 μm respectively.

This signal 2000 was subsequently amplified by an active fibre optical amplifier produced by the present applicant (Amplifos OP-980-F).

The optical beam splitter 30 consisted of 3 $1 \times 2$ 50/50 splitters, arranged in a tree configuration, and produced by MP Fiber Optics.

The optical delay lines 40 consisted of four sections of conventional optical fibre of the step index type.

The shortest section of fibre had a length $L_1$ equal to approximately 10 cm. Additionally, the differences in length between the various delay lines were as follows:

* $\Delta L_{1,2} = L_2 - L_1 = 5*\Delta L_c = 40.8$ cm;
* $\Delta L_{2,3} = L_3 - L_2 = 4*\Delta L_c = 32.7$ cm; and
* $\Delta L_{3,4} = L_4 - L_3 = 3*\Delta L_c = 24.5$ cm,

where $L_2$, $L_3$, $L_4$ denote the length of the second, third and fourth optical delay line respectively, and $\Delta L_c$ was equal to approximately 8.17 cm.

The delay lines were therefore such that it was possible to recognize the aforesaid chip sequence 1001000100001 and to carry out an auto-correlation operation when the chip sequence was present at the input of the optical apparatus 100 and an operation of cross-correlation when a sequence of bits different from the chip sequence was present at the input of the optical apparatus 100.

The coupler 50 consisted of 3 $1 \times 2$ 50/50 splitters, arranged in a tree configuration and produced by MP Fiber Optics.

The highly incoherent optical signal 3000 at the output of the coupler 50 was subsequently converted into a corresponding electrical signal by means of a New Focus 1517 photodiode 61 having a band of 6 GHz. This electrical signal was observed by means of a high-speed sampling digital oscilloscope 1900 made by Tektronix (model 11801B D.O.).

The various power values present at the various points of the experimental set-up were as follows:

| | | |
|---|---|---|
| $P_A$ | = | 71 μW |
| $P_B$ | = | 130 μW |
| $P_C$ | = | 1.32 mW |
| $P_D$ | = | 11.4 mW |
| $P_E$ | = | 1.5 mW |

where $P_A$ is the power of the spontaneous emission from the second active waveguide 27 at the input of the first active waveguide 21, $P_B$ is the mean power of the ASE at the input of the optical amplifier 5000, $P_C$ is the mean power of the coherent optical signal 1000 at the output of the optical amplifier 1800, $P_D$ is the mean power of the highly incoherent optical signal 2000 at the input of the beam splitter 30 and $P_E$ is the mean power of the highly incoherent optical signal 3000 at the input of the photodiode 61.

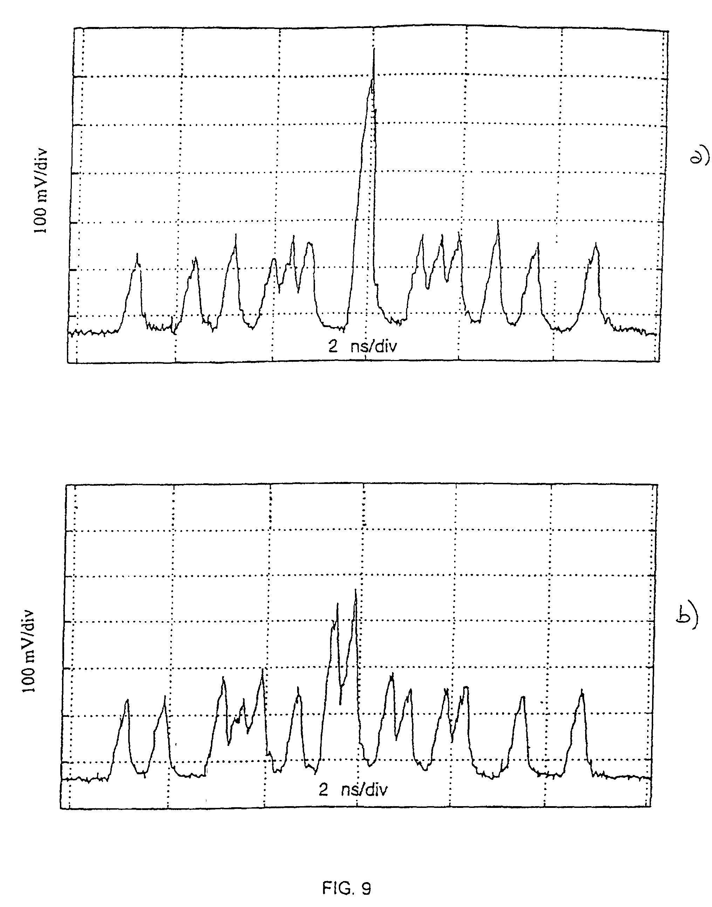

The results obtained from this first set of measurements are shown in Fig. 9.

This shows the waveforms of the electrical signal displayed by the Tektronix digital oscilloscope when the following were present at the input of the optical apparatus 100:

- a sequence equal to the chip sequence 1001000100001 (Fig. 9a, result of an auto-correlation operation); and
- a sequence equal to 1010001000001 (Fig. 9b, result of an operation of cross-correlation between the chip sequence and a sequence equal to 1010001000001).

Both of these waveforms were found to be substantially stable in time.

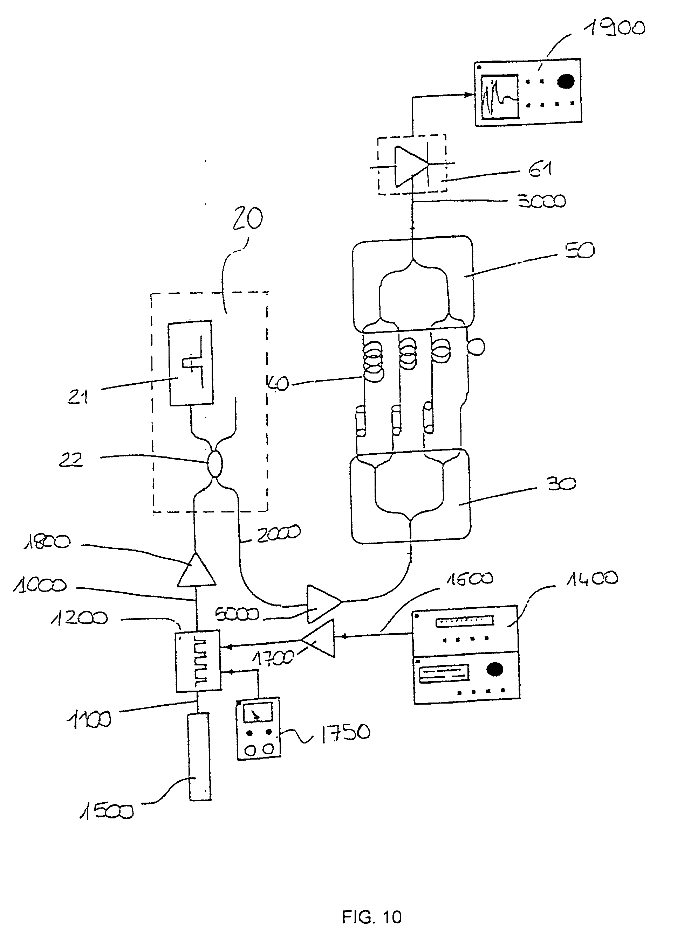

A second series of experimental measurements was then carried out, using the set-up shown in Fig. 10, which is identical to that in Fig. 8 except for the fact that the optical-optical device 20 according to the invention had the configuration shown in Fig. 2.

More particularly, the set-up in Fig. 10 differed from that in Fig. 8 in that it did not have the second active waveguide 27 or the optical beam splitter 28.

Additionally, the various power values present at the various points of the experimental set-up were as follows:

| | | |
|---|---|---|
| $P_B$ | = | 64 μW |

(continued)

| | | |
|---|---|---|
| $P_C$ | = | 1.32 mW |
| $P_D$ | = | 10 mW |
| $P_E$ | = | 1.3 mW |

where $P_B$ is the mean power of the ASE at the input of the optical amplifier 5000, $P_C$ is the mean power of the coherent optical signal 1000 at the output of the optical amplifier 1800, $P_D$ is the mean power of the highly incoherent optical signal 2000 at the input of the beam splitter 30 and $P_E$ is the mean power of the highly incoherent optical signal 3000 at the input of the photodiode 61.

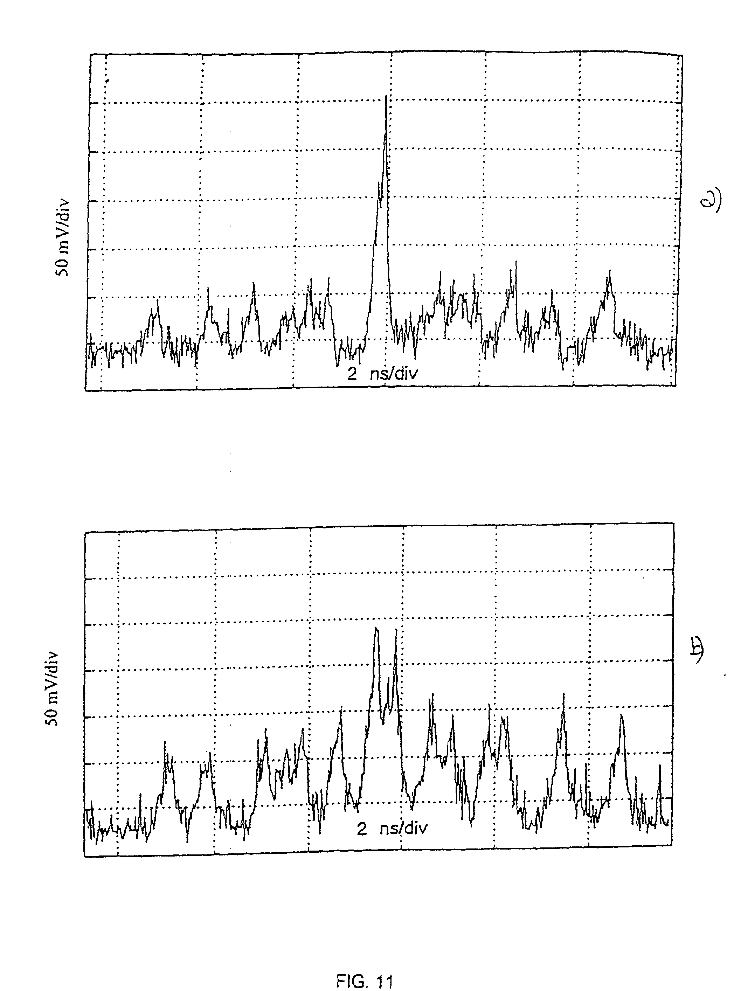

The results are shown in Figure 11, which shows the waveforms of the electrical signal displayed by the Tektronix digital oscilloscope when the following were present at the input of the apparatus:

- a sequence equal to the chip sequence 1001000100001 (Fig. 11a, result of an auto-correlation operation); and
- a sequence equal to 1010001000001 (Fig. 11b, result of an operation of cross-correlation between the chip sequence and a sequence equal to 1010001000001).

In this case also, both of the waveforms obtained in this way were found to be substantially stable in time.

When the waveforms in Fig. 9 are compared with those in Fig. 11, it may be noted that a smaller signal-noise ratio was obtained in the second series of measurements than in the first series of measurements. Although the cause of this result has not yet been fully explained, the inventors of the present invention consider that the result was due to the fact that the power level of the incoherent optical signal 2000 available at the output of the optical-optical device according to the invention shown in Fig. 2 (used in the second series of measurements) was lower than that available at the output of the optical-optical device according to the invention shown in Fig. 4 (used in the first series of measurements).

For the purpose of comparison, a third series of experimental measurements was then carried out with a comparison optical apparatus which did not use an optical-optical device according to the invention.

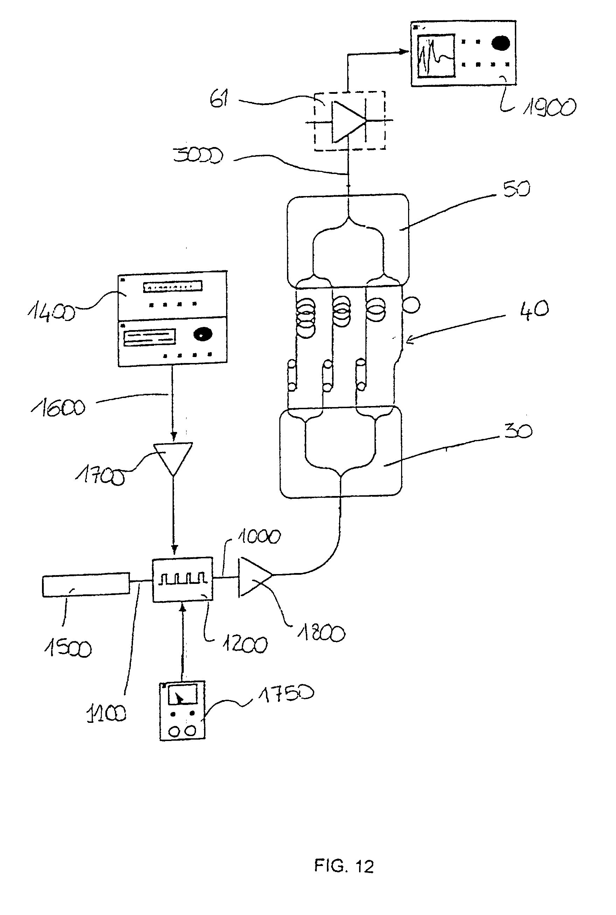

The experimental set-up (shown in Fig. 12) used in this third series of measurements is identical to that in Fig. 8 except for the fact that the optical-optical device 20 was absent and the output of the optical amplifier 1800 was connected directly to the input of the optical beam splitter 30. The intensity-modulated coherent optical signal 1000 was thus sent directly to the input of the optical beam splitter 30.

In this case also, the Tektronix digital oscilloscope was used to display the waveforms of the electrical signal at the output of the photodiode 61 when the following were present at the input of the apparatus:

- a sequence equal to the chip sequence 1001000100001 (result of an auto-correlation operation); and
- a sequence equal to 1010001000001 (result of an operation of cross-correlation between the chip sequence and a sequence equal to 1010001000001).

The waveforms obtained in this way were found to be very unstable in time with respect to those obtained in the preceding two experimental tests carried out with the optical-optical device according to the invention.

Additionally, they had, within the band (6 GHz) of the photodiode 61, high-intensity noise components which were virtually absent from the waveforms displayed in Figures 9 and 11.

In applications in which the intensity of the output signal is compared with a predetermined threshold of intensity by a comparator device, the fluctuations in time of this output signal and the presence of the aforesaid noise components make the selection of the level of the said threshold very difficult and make the result of the comparison operation very unreliable.

The performance of the optical apparatus with the optical-optical device according to the invention, which does not have these disadvantages, is therefore greatly improved with respect to that of the comparison optical apparatus which is completely identical except for the absence of the aforesaid optical-optical device according to the invention.

In another application, the optical apparatus 100 comprising the optical-optical device according to the invention may also be used in a digital optical transmission network, where the information is sent in the form of sequences of bits having predetermined lengths (frames) in association with a device capable of recovering the frame start synchronization.

In such a network, the time interval between the start of one frame and the next is the frame time $T_t$, and the frame frequency $f_t$ is equal to $1/T_t$.

It is necessary to recover the frame synchronization, in other words to have a synchronizing signal which indicates the start of each frame, in the receiving apparatus and within each node of this type of network. This synchronizing signal is used for decoding the received sequence of bits at the time of reception, and for switching the data flows at the nodes of the network.

Generally, the synchronization is recovered by introducing between one frame and the next a predetermined sequence of bits (flag) which is subsequently recognized at the nodes and in the receiving apparatus by a suitable recognition device.

The said recognition device is preferably an asynchronous wholly optical device which supplies an optical output signal having peaks corresponding to the occurrence of recognition of flags [G. Maier et al., "Free-space architecture for an ATM header processing function", Proceedings - Optics in Computing 1998, pp. 127-130; European patent application No. 98202411.9 filed in the name of the present applicant].

This device, however, is unable to distinguish the flags, which arrive at its input with a frame frequency $f_t$, from the sequences of bits which contain the digital information to be transmitted and which on random intervals are identical to the said flags ("out of frequency" sequences). The optical signal at the output of this recognition device may therefore have erroneous peaks which are randomly distributed ("out of frequency"), due to these "false recognitions".

The optical apparatus 100, comprising an optical-optical device according to the invention, can be used in association with this flag recognition device to eliminate these out-of-frequency peaks.

In this application, the said plurality of optical delay lines 40 of the optical apparatus 100 delays the said N highly incoherent optical signals with respect to each other by a quantity equal to the frame time $T_t$ or to a whole-number multiple of this. More particularly, the length of the i-th optical delay line is selected in such a way as to delay the i-th signal which is propagated in it by a time $\tau_i = (i-1)*T_t + T_1$, where $1 \leq i \leq N$ and $T_1$ is the delay (which may take any value, preferably the lowest possible) introduced by the first optical delay line.

Each of the said N highly incoherent optical signals, which are delayed with respect to each other by a time equal to $T_t$ or to a whole-number multiple of this, has an intensity equal to 1/N times the intensity of the highly incoherent optical signal 2000 at the input of the $1 \times N$ optical beam splitter 30. Consequently, when the apparatus 100 is operating in normal conditions, the intensity of the highly incoherent optical signal 3000 at the output of the coupler 50 will be equal to that of the said highly incoherent optical signal 2000 when a peak with a frame frequency $f_t$ enters the input of the optical apparatus 100. Conversely, when an out-of-frequency peak (not belonging to a regular sequence of peaks delayed by $T_t$) enters the input of the optical apparatus 100 owing to a "false recognition", the intensity of the said highly incoherent optical signal 3000 will be lower. Typically, the intensity of the said highly incoherent optical signal 3000 corresponding to the out-of-frequency peaks is reduced by a factor N with respect to that corresponding to the peaks with the frame frequency $f_t$.

By comparing the value of the intensity of the said highly incoherent optical signal 3000 with a suitable selected threshold voltage $V_{th}$, the comparator device 60 will therefore be capable of selecting only those peaks which are delayed by $T_t$ with respect to each other.

Additionally, when the flag recognition device is a conventional optical correlator of sequences of bits, the synchronizing signal will comprise, in addition to the "out-of-frequency" peaks caused by the aforesaid false recognitions, pulses which have a lower intensity than that of the said peaks and which are the result of operations of cross-correlation between the flags which are to be recognized and all the other possible sequences of N bits arriving at the input of the correlator.

In this case also, the intensity of the said highly incoherent optical signal 3000 in the presence of the said cross-correlation pulses will be much lower than in the presence of the said peaks with the frame frequency $f_t$. In the comparator device 60, these cross-correlation pulses will therefore be easily distinguishable from the said peaks with the frame frequency $f_t$.

**Claims**

1. Optical-optical device (20) comprising:

   - an input (23) for a coherent optical signal (1000) carrying a set of digital data;
   - an active waveguide (21) optically connected to the said input (23) for the propagation of the said coherent optical signal (1000), the said active waveguide (21) having a first (211) and a second (212) end and being capable of generating highly incoherent light;
   - a pump source for pumping the said active waveguide (21) and obtaining a predetermined gain; and
   - an output (24), optically connected to the said second end (212) of the said active waveguide (21), for the exclusive output of at least part of the said highly incoherent light;

in which the said coherent optical signal (1000) has a power and a wavelength selected in such a way that the said set of digital data which it carries is transferred to the said highly incoherent light during its propagation in the said active waveguide (21).

2. Optical-optical device (20) according to Claim 1, **characterized in that** the said power and the said wavelength of the said coherent optical signal (1000) are selected in such a way as to saturate the said predetermined gain of the said active waveguide (21).

3. Optical-optical device (20) according to Claim 1 or 2, **characterized in that** the said coherent optical signal (1000) is intensity-modulated as a function of the said set of digital data.

4. Optical-optical device (20) according to any of the preceding Claims 1 to 3, **characterized in that** the said active waveguide (21) is of the semiconductor type.

5. Optical-optical device (20) according to any of the preceding Claims 1 to 4, **characterized in that** the quantity of highly incoherent light can be increased by connecting another source of highly incoherent light to the said first end (211) of the said active waveguide (21).

6. Optical-optical device (20) according to any of the preceding Claims 1 to 5, **characterized in that**

   - the said first end (211) of the said active waveguide (21) forms the said input (23) of the said optical-optical device (20);
   - the said coherent optical signal (1000) and at least part of the said highly incoherent light are co-propagated in the said active waveguide (21) from the said first end (211) towards the said second end (212); and
   - the said optical-optical device (20) also comprises a suitable optical filter (26) associated with the said output (24) and capable of eliminating the said coherent optical signal (1000) after it has been propagated along the said active waveguide (21).

7. Optical-optical device (20) according to any of the preceding Claims 1 to 5, **characterized in that**

   - the said input (23) of the said optical-optical device (20) is also optically connected to the said second end (212) of the said active waveguide (21);
   - the said highly incoherent light is propagated at least partially in the said active waveguide (21) from the said first end (211) towards the said second end (212); and
   - the said coherent optical signal (1000) is counter-propagated in the said first active waveguide (21) from the said second end (212) towards the said first end (211).

8. Method for transferring a set of digital data from a coherent optical signal to a highly incoherent light beam in such a way as to produce a highly incoherent optical signal carrying the said set of digital data, the said method comprising the phases of

   a) pumping an active waveguide with a pump source, to obtain a predetermined gain and to generate a highly incoherent light beam;
   b) propagating the said coherent optical signal through the said active waveguide in such a way that the said highly incoherent light is intensity-modulated as a function of the said set of digital data;
   c) sending at least one part of the said highly incoherent light, modulated in this way, to subsequent processing stages; and
   d) preventing the said coherent optical signal from being sent, after it has been propagated along the said active waveguide, to the said subsequent processing stages together with the said at least one part of the said highly incoherent light.

9. Method according to Claim 8, **characterized in that** the said coherent optical signal has a power and a wavelength such that the said predetermined gain of the said active waveguide is saturated.

10. Method according to Claim 8 or 9, **characterized in that** phase d) is carried out by means of suitable optical filtering of the said coherent optical signal after it has been propagated along the said active waveguide.

11. Method according to Claim 8 or 9, **characterized in that** phase d) is carried out by propagating the said coherent optical signal in the said active waveguide in the opposite direction to that of the said at least one part of the highly incoherent light.

**Patentansprüche**

1. Optik-Optik-Einrichtung (20), welche aufweist:

   - einen Eingang (23) für ein kohärentes optisches Signal (1000), welches einen Satz von Digitaldaten trägt;
   - einen aktiven Wellenleiter (21), welcher optisch mit dem Eingang (23) verbunden ist, für die Ausbreitung des kohärenten optischen Signals (1000), wobei der aktive Wellenleiter (21) ein erstes (211) und ein zweites (212) Ende hat und wobei er in der Lage ist, ein hoch inkohärentes Licht zu erzeugen;
   - eine Pumpquelle zum Pumpen des aktiven Wellenleiters (21) und zum Erhalten einer vorbestimmten Verstärkung; und
   - einen Ausgang (24), welcher optisch mit dem zweiten Ende (212) des aktiven Wellenleiters (21) verbunden ist, zum ausschließlichen Ausgeben wenigstens eines Teils des hoch inkohärenten Lichtes;

   wobei das kohärente optische Signal (1000) eine Leistung und eine Wellenlänge hat, welche in einer solchen Weise ausgewählt wird, dass der Satz von digitalen Daten, welchen es trägt, an das hoch inkohärente Licht während seiner Ausbreitung in dem aktiven Wellenleiter (21) übertragen wird.

2. Optik-Optik-Einrichtung (20) nach Anspruch 1, **dadurch gekennzeichnet, dass** die Leistung und die Wellenlänge des kohärenten optischen Signals (1000) in solch einer Weise ausgewählt werden, dass die vorbestimmte Verstärkung des aktiven Wellenleiters (21) gesättigt wird.

3. Optik-Optik-Einrichtung (20) nach Anspruch 1 oder 2, **dadurch gekennzeichnet, dass** das kohärente optische Signal (1000) als eine Funktion des Satzes von digitalen Daten intensitätsmoduliert ist.

4. Optik-Optik-Einrichtung (20) nach einem der vorausgehenden Ansprüche 1 bis 3, **dadurch gekennzeichnet, dass** der aktive Wellenleiter (21) vom Halbleitertyp ist.

5. Optik-Optik-Einrichtung (20) nach einem der vorausgehenden Ansprüche 1 bis 4, **dadurch gekennzeichnet, dass** die Menge des hoch inkohärenten Lichtes vergrößert werden kann, indem eine andere Quelle von hoch inkohärentem Licht mit dem ersten Ende (211) des aktiven Wellenleiters (21) verbunden wird.

6. Optik-Optik-Einrichtung (20) nach einem der vorausgehenden Ansprüche 1 bis 5, **dadurch gekennzeichnet, dass**

   - das erste Ende (211) des aktiven Wellenleiters (21) den Eingang (23) der Optik-Optik-Einrichtung (20) bildet;
   - das kohärente optische Signal (1000) und wenigstens ein Teil des hoch inkohärenten Lichtes sich gemeinsam in dem aktiven Wellenleiter (21) von dem ersten Ende (211) in Richtung des zweiten Endes (212) ausbreiten; und
   - die Optik-Optik-Einrichtung (20) auch ein geeignetes optisches Filter (26) hat, welches mit dem Ausgang (24) verbunden ist und welches in der Lage ist, das kohärente optische Signal (1000) zu eliminieren, nachdem es sich entlang des aktiven Wellenleiters (21) ausgebreitet hat.

7. Optik-Optik-Einrichtung (20) nach einem der vorausgehenden Ansprüche 1 bis 5, **dadurch gekennzeichnet, dass**

   - der Eingang (23) der Optik-Optik-Einrichtung (20) auch optisch mit dem zweiten Ende (212) des aktiven Wellenleiters (21) verbunden ist;
   - das hoch inkohärente Licht sich wenigstens teilweise in dem aktiven Wellenleiter (21) von dem ersten Ende (211) in Richtung des zweiten Endes (212) ausbreitet; und
   - das kohärente optische Signal (1000) sich in dem ersten aktiven Wellenleiter (21) von dem zweiten Ende (212) in Richtung des ersten Endes (211) in Gegenrichtung ausbreitet.

8. Verfahren zum Übertragen eines Satzes von digitalen Daten von einem kohärenten optischen Signal zu einem hoch inkohärenten Lichtstrahl in der Weise, dass ein hoch inkohärentes optisches Signal hergestellt wird, welches den Satz von Digitaldaten trägt, wobei das Verfahren die Phasen aufweist:

a) Pumpen eines aktiven Wellenleiters mit einer Pumpquelle, um eine vorbestimmte Verstärkung zu erhalten und um einen hoch inkohärenten Lichtstrahl zu erzeugen;

b) Ausbreiten des kohärenten optischen Signals durch den aktiven Wellenleiter in einer derartigen Weise, dass das hoch inkohärente Licht als eine Funktion des Satzes von digitalen Daten intensitätsmoduliert wird;

c) Senden wenigstens eines Teils des hoch inkohärenten Lichtes, welches auf diese Weise moduliert ist, an nachfolgende Bearbeitungsstufen; und

d) Verhindern, dass das kohärente optische Signal, nachdem es sich entlang des aktiven Wellenleiters ausgebreitet hat, an die nachfolgenden Bearbeitungsstufen zusammen mit wenigstens einem Teil des hoch inkohärenten Lichtes gesandt wird.

9. Verfahren nach Anspruch 8, **dadurch gekennzeichnet, dass** das kohärente optische Signal eine Leistung und eine Wellenlänge in der Weise hat, dass die vorbestimmte Verstärkung des aktiven Wellenleiters gesättigt wird.

10. Verfahren nach Anspruch 8 oder 9, **dadurch gekennzeichnet, dass** die Phase d) mit Hilfe einer gebräuchlichen optischen Filterung des kohärenten optischen Signales durchgeführt wird, nachdem es sich entlang des aktiven Wellenleiters ausgebreitet hat.

11. Verfahren nach Anspruch 8 oder 9, **dadurch gekennzeichnet, dass** die Phase d) dadurch ausgeführt wird, dass sich das kohärente optische Signal in dem aktiven Wellenleiter in umgekehrter Richtung zu der des wenigstens einen Teil des hoch inkohärenten Lichtes ausbreitet.

## Revendications

1. Dispositif optique-optique (20) comprenant :

   - une entrée (23) pour un signal optique cohérent (1000) acheminant un ensemble de données numériques ;
   - un guide d'ondes actif (21) relié de manière optique à ladite entrée (23) pour la propagation dudit signal optique cohérent (1000), ledit guide d'ondes actif (21) possédant une première (211) et une deuxième (212) extrémités et étant capable de générer une lumière hautement incohérente ;
   - une source de pompage destinée à pomper ledit guide d'ondes actif (21) et à obtenir un gain prédéterminé ; et
   - une sortie (24), reliée de manière optique à ladite deuxième extrémité (212) dudit guide d'ondes actif (21), pour la sortie exclusive d'au moins une partie de ladite lumière hautement incohérente ;

   dans lequel ledit signal cohérent (1000) possède une puissance et une longueur d'onde sélectionnées de telle manière à ce que ledit ensemble de données numériques qu'il achemine est transféré vers ladite lumière hautement incohérente pendant sa propagation dans ledit guide d'ondes actif (21).

2. Dispositif optique-optique (20) selon la revendication 1, **caractérisé en ce que** ladite puissance et ladite longueur d'onde dudit signal optique cohérent (1000) sont sélectionnées de telle manière à saturer ledit gain prédéterminé dudit guide d'ondes actif (21).

3. Dispositif optique-optique (20) selon la revendication 1 ou 2, **caractérisé en ce que** ledit signal optique cohérent (1000) est modulé par rapport à l'intensité en tant que fonction dudit ensemble de données numériques.

4. Dispositif optique-optique (20) selon l'une quelconque des revendications 1 à 3, **caractérisé en ce que** ledit guide d'ondes actif (21) est du type à semiconducteur.

5. Dispositif optique-optique (20) selon l'une quelconque des revendications 1 à 4, **caractérisé en ce que** la quantité de lumière hautement incohérente peut être augmentée en reliant une autre source de lumière hautement incohérente à ladite première extrémité (211) dudit guide d'ondes actif (21).

6. Dispositif optique-optique (20) selon l'une quelconque des revendications 1 à 5, **caractérisé en ce que**

   - ladite première extrémité (211) dudit guide d'ondes actif (21) forme ladite entrée (23) dudit dispositif optique-optique (20) ;
   - ledit signal optique cohérent (1000) et au moins une partie de ladite lumière hautement incohérente sont co-propagés dans ledit guide d'ondes actif (21) à partir de ladite première extrémité (211) vers ladite deuxième extrémité (212) ; et

- ledit dispositif optique-optique (20) comprend également un filtre optique convenable (26) associé à ladite sortie (24) et capable d'éliminer ledit signal optique cohérent (1000) après qu'il a été propagé le long dudit guide d'ondes actif (21).

7. Dispositif optique-optique (20) selon l'une quelconque des revendications 1 à 5, **caractérisé en ce que**

- ladite entrée (23) dudit dispositif optique-optique (20) est également reliée de manière optique à ladite deuxième extrémité (212) dudit guide d'ondes actif (21);
- ladite lumière hautement incohérente se propage au moins partiellement dans ledit guide d'ondes actif (21) à partir de la première extrémité (211) vers ladite deuxième extrémité (212) ; et
- ledit signal optique cohérent (1000) est contre-propagé dans ledit premier guide d'ondes actif (21) à partir de ladite deuxième extrémité (212) vers ladite première extrémité (211).

8. Procédé destiné à transférer un ensemble de données numériques d'un signal optique cohérent vers un faisceau lumineux hautement incohérent de telle manière à produire un signal optique hautement incohérent acheminant ledit ensemble de données numériques, ledit procédé consistant à :

a) pomper un guide d'ondes actif avec une source de pompage afin d'obtenir un gain prédéterminé et de générer un faisceau lumineux hautement incohérent ;

b) propager ledit signal optique cohérent à travers ledit guide d'ondes actif de telle manière à ce que ladite lumière hautement incohérente ait son intensité modulée en tant que fonction dudit ensemble de données numériques ;

c) envoyer au moins une partie de ladite lumière hautement incohérente, modulée de cette manière, vers les étapes ultérieures de traitement ; et

d) empêcher ledit signal optique cohérent d'être envoyé, après qu'il a été propagé le long dudit guide d'ondes actif, vers lesdites étapes ultérieures de traitement avec ladite partie de ladite lumière hautement incohérente.

9. Procédé selon la revendication 8, **caractérisé en ce que** ledit signal optique cohérent possède une puissance et une longueur d'onde telles que ledit gain prédéterminé dudit guide d'ondes actif est saturé.

10. Procédé selon la revendication 8 ou 9, **caractérisé en ce que** la phase d) est exécutée au moyen d'un filtrage optique convenable dudit signal optique cohérent après qu'il a été propagé le long dudit guide d'ondes actif.

11. Procédé selon la revendication 8 ou 9, **caractérisé en ce que** la phase d) est exécutée en propageant ledit signal optique cohérent dans ledit guide d'ondes actif dans la direction opposée à celle d'au moins une partie de ladite lumière hautement incohérente.

FIG. 1

FIG. 2

FIG. 3

FIG. 4

FIG. 5

FIG. 6

FIG. 7

FIG. 8

FIG. 9

FIG. 10

FIG. 11

FIG. 12